# EUROPEAN PATENT SPECIFICATION

(11) **EP 3 003 011 B1**
(45) Date of publication and mention of the grant of the patent: **16.05.2018**
(21) Application number: 14803956.3
(22) Date of filing: 28.05.2014
(51) Int. Cl.: A01G 23/00, F15B 1/02, F15B 21/14

(54) **A METHOD AND AN ARRANGEMENT IN A FOREST WORK UNIT**
VERFAHREN UND ANORDNUNG IN EINER WALDARBEITSEINHEIT
PROCÉDÉ ET AMÉNAGEMENT DANS UNE UNITÉ DE TRAVAUX FORESTIERS

(30) Priority: 31.05.2013 FI 20135603
(43) Date of publication of application: 13.04.2016
(73) Proprietor: Ponsse OYJ, 74200 Vieremä (FI)
(72) Inventor: ERKKILÄ, Mikko, FI-33700 Tampere (FI); EINOLA, Kalle, FI-33680 Tampere (FI)
(74) Representative: Kolster Oy Ab
(86) International application number: PCT/FI2014/050427
(87) International publication number: WO 2014/191628

(56) References cited:
- EP-A1- 2 113 672
- WO-A1-2012/166022
- WO-A1-2013/025459
- WO-A1-2014/032757
- JP-A- 2010 121 373
- US-A1- 2009 241 534
- US-A1- 2011 196 582

## Description

### Background

The invention relates to forest work units, and particularly to power supply for forest work units.

Various forest work units, such as forwarders and harvesters, are known for carrying out mechanized harvesting. Typically, a forest work unit comprises a chassis which may consist of one or more frame parts and which is equipped with wheels or tracks and capable of moving in the terrain. Such a chassis is usually provided at least with a control cabin and appropriate tools. Such a tool may be formed for instance by a boom assembly, such as a crane or a loader. An end of the boom assembly may be provided with a handling device which is supported by the boom assembly and used for carrying out handling procedures on timber harvested from a forest.

At an end of the boom assembly provided in the harvester, various harvester heads are moved and used that are capable of handling tree trunks in a versatile manner. Such a harvester head may be used in a desired manner for instance at least for felling, delimbing, measuring and cutting one or more tree trunks or other timber being handled. On the other hand, various handling devices are also known for instance for carrying out fuel wood harvesting and clearing, such as a fuel wood grab which does not necessarily comprise means required for delimbing or feeding, for instance. Typically, most of the functions of forest machines participating in the handling of a tree trunk, for instance sawing, feeding, moving the delimbing blades and feed rollers into open and close positions, lifting, folding and turning of the boom assembly, as well as controlling a telescopic extension provided in the boom assembly in and out, are today hydraulically implemented owing to, for instance, the good power density and controllability of hydraulic solutions.

A forwarder is a forest machine particularly intended for short distance hauling of timber and capable of collecting and transporting in its load space pieces of tree trunks handled by a harvester, for instance, to the border of a cutting area for onward transport.

Further, machines called combi machines are known that are capable of performing tasks of both a harvester and a forwarder.

In the above-mentioned forest work units, the primary power source has conventionally been a diesel engine by means of which the mechanical, electric or pressure medium transmitted power is mostly provided. Such a primary power source, in turn, may typically employ one or more hydraulic pumps to pressurize the pressure medium. From the primary power source, power and performance may further be transmitted also in ways other than hydraulically for instance for the needs of a drive transmission of a forest work unit or the work and handling devices connected thereto.

The control of a diesel engine constituting the primary power source in forest work units has conventionally been implemented in a very simple manner. The control of the power source thus aims at a substantially constant rotation speed, in which case its operation is usually controlled for instance by means of a control device, i.e. a controller, provided in connection with the diesel engine.

Typically, however, when such solutions are used, situations occur wherein the power of the engine yet remains, at least instantaneously, too low. Such a situation typically causes a dip in the rotation speed of the power source, which, in turn, slows down or hinders the function to be carried out, and even prevents it from being successfully performed. For instance, such post-felling processes as saw-cutting a tree trunk are particularly of such a nature that the slowing down of the function may lead to significant losses in the form of so-called cutting flaws. Typically, such flaws are caused for instance when in cut-off sawing the sawing speed remains insufficient, and, when while supporting a log with its one end free, the point at which the log was cut off is subjected to a great bending moment which may result in said harvesting damages in the wood material. In other words, even an instantaneous lack of a sufficient amount of available power may thus lower not only the efficiency of the process but also the quality of work.

On the other hand, along with the state-of-the-art engine technology and the stricter emission regulations, for instance the capacity of diesel engines to respond to the relatively high and quick stepwise increase in load has become even lower. On the other hand, it is even more difficult to meet the new emission regulations if the load of the engine is very uneven, and great and rapid power peaks occur. In addition, the most recent emission regulations concerning Off-Highway engines lay down requirements for responding to dynamic load expressly so as to prevent the set emission limits from being exceeded.

This is the case for instance because the modern diesel engine, which meets e.g. the Euromot 3 emission standard, almost without exception is air-to-air intermediate cooled, turbocharged as well as equipped with an electrically controlled injection system. The power and torque of such an engine are mostly based on turbocharging, in which case the dynamics of power production of the engine depends on the presence of boost pressure. In such a case, the amount of fuel to be injected into a lightly loaded engine is small and the boost pressure is typically low, so when the engine is loaded abruptly, the power production capacity of the engine does not necessarily immediately correspond to the nominal power of the engine, according to which a power source for a work machine is usually dimensioned, for instance.

As to harvester heads for harvesters, it is also known that the harvester head determines or measures in a manner known per se the properties of the tree trunk being handled, and for instance these dimensions of the tree trunk are used for controlling the primary power source of a forest work unit to reach a suitable rotation speed or otherwise controlled power production ability while the tree trunk is being handled. One such solution is disclosed in document FI 111183. However, it has been discovered that the power demand of the functions of a forest work unit does not always depend on the trunk-specific properties of the tree being handled but the implementation of the functions of the forest work unit and for instance the properties of hydrostatic power transmission affect the power demand. This is the case particularly when handling small trees. WO2014032757, which was not public on the effective date of the present document, discloses a hydraulic energy recovery system having an output drive unit which can be actuated by a drive unit and by which a hydraulic motor-pump unit can be driven which, in at least one energy feed position, supplies an energy storage device and/or working hydraulics with fluid; and which, in a recuperation position, discharges fluid under pressure from the energy storage device at least to the working hydraulics and/or is used to actuate the output drive unit. Other prior art energy saving and recuperation systems are disclosed in WO2013/025459 A1, US2009/0241534A1, EP2113672 A1, WO2012/166022A1.

### Brief description

An object of the invention is thus to provide a novel method and an arrangement implementing the method so as to enable the aforementioned problems to be solved. The object is achieved by a method and an arrangement which are characterised by what is stated in the independent claims. Preferred embodiments of the invention are disclosed in the dependent claims.

The solution is based on the idea that energy obtained from one or more energy sources of the forest work unit is, during a work phase of low power consumption and by means of a pump-motor conveyed to an energy storing means from which, during a high power consumption work phase and by means of a pump-motor, it is conveyed to a hydraulic system driving at least one actuator of the forest work unit.

An advantage of the method and arrangement according to the solution is that at peak phases of power demand, a higher-than-average power demand can be met by means of hydraulic energy stored in the energy storing means. In such a case, the primary power source of the forest work unit may be dimensioned according to the average power demand rather than according to power peaks, thus enabling its size to be also optimized. On the other hand, alternatively, it is possible to retain the primary power source that was previously used without decreasing the nominal power and size category, and to utilize the additional power provided by the present solution in support and supplementary to the primary power source. An advantage of the solution is also that the solution enables power losses caused by energy conversions to be diminished since the amount of energy conversions may be minimized when energy may for instance be transferred between the energy storing means and the hydraulic system driving at least one actuator in a hydraulic form without converting it into a mechanical form in the meantime.

### Brief description of figures

The solution is now explained in closer detail in connection with the preferred embodiments and with reference to the accompanying drawings, in which:
Figure 1 is a schematic side view of a forest work unit,
Figure 2 shows a measured power demand of a typical harvester-type forest work unit from a primary power source;
Figure 3 is a schematic view of a method in connection with power control of a forest work unit;
Figure 4 is a schematic view of an arrangement in power control of a forest work unit;
Figure 5 is a schematic view of an arrangement in power control of a forest work unit;
Figure 6 is a schematic view of yet another arrangement in power control of a forest work unit; and
Figures 7a, 7b, and 7c schematically show utilizability of energy stored in an energy storing means.

### Detailed description

Some preferred embodiments of the present solution are described below by illustrating them with reference to the aforementioned figures. The solution may thus comprise method steps and/or structural parts which are indicated in the figures by reference numbers and to which reference is made by corresponding reference numbers in this description. For the sake of clarity, not all mutually corresponding elements are always indicated by a number in the figures but only one or a part thereof may be indicated by a number.

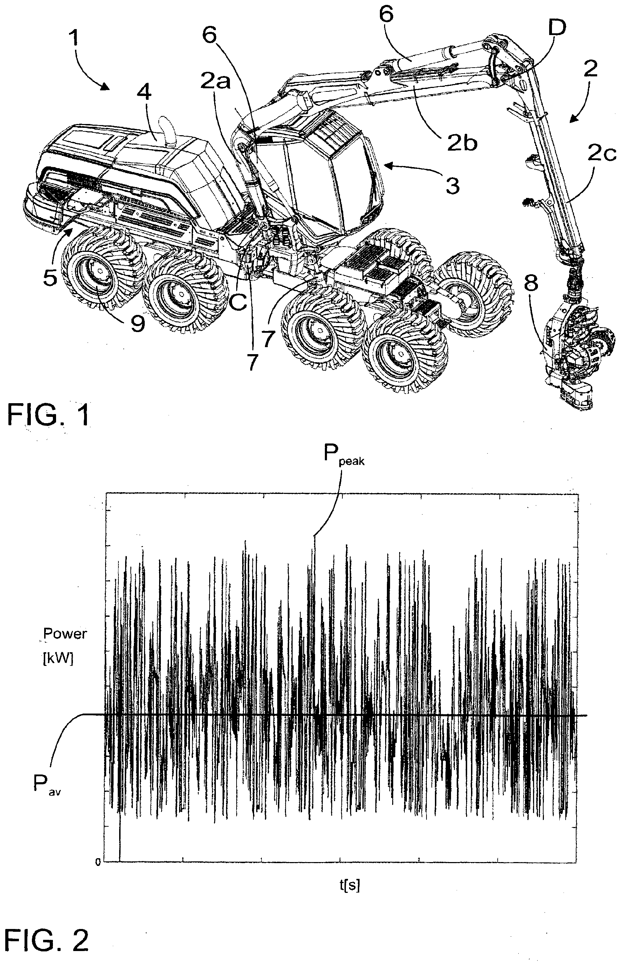

Figure 1 is a schematic side view of a forest work unit, in this case a harvester. The forest work unit 1 may comprise for instance a frame 5 consisting of at least one frame part, a boom assembly 2, a control cabin 3, a primary power source 4, and an appropriate number of wheels, tracks, bogies, track assemblies or other structural parts 9 necessary for moving the machine and known per se. The boom assembly 2 may comprise one or more boom sections 2a, 2b, 2c that may be arranged with respect to one another and/or in the frame 5 of the forest work unit immovably, pivotably by folding joints D, or in another manner known per se. In the embodiment of Figure 1, the boom assembly is shown to have a fork-like structure, but in different embodiments the boom assembly 2 or the boom assembly section 2a, 2b, 2c may be formed by any boom assembly type for a forest work unit known per se, for instance a sliding boom assembly.

Depending on the forest work unit 1, the intended use and the situation, one or more tools 8, such as a crane, a grab, a bucket, a cutting and/or shearing means and a hammer or another appropriate tool or a combination thereof, may be connected to the boom assembly 2. The boom assembly 2 and/or its sections may be turned with respect to the frame and/or one another for instance by at least one actuator 6. The forest work unit 1 may further comprise other actuators 7, of which only some feasible examples are shown in Figure 1, enabling various functions of the forest work unit 1 to be achieved. The actuator 6, 7 may be for instance a pressure-medium-operated actuator, such as a hydraulic cylinder. In different embodiments, the actuator 6, e.g. a cylinder, may be arranged in the frame 5 and/or the boom assembly section 2a, 2b, 2c also in another manner known per se. In this description, such actuators 6, 7 and other hydraulically operated devices and components enabling various functions of the forest work unit 1 to be achieved are generally called tools. In other words, the tools may be various power-consuming devices and components of the forest work unit 1.

Figure 2 shows an actual measured power demand of a typical harvester-type forest work unit 1 from a primary power source 4, which is typically a diesel engine, as a function of time t[s] when handling normally-sized and average trees. The figure shows that a maximum Pₚₑₐₖ of power demand may typically be more than double as compared with an average power demand Pₐᵥ, and the power demand is highly varying. Conventionally, however, it has been compulsory to dimension the primary power source according to the maximum power consumption in order to ensure sufficient power also for the peak phases Pₚₑₐₖ in the power demand since too low a power compromises the efficiency of the process and the quality of the product.

In the present solution, power produced by the primary power source 4 of the forest work unit 1 may be stored at least partly in an energy storing means, such as a hydraulic pressure accumulator or another arrangement capable of storing hydraulic energy. The power stored in the energy storing means is thus available for use in the form of hydraulic, electric or another kind of power transfer, when necessary. In such a case, this power source, which is a secondary power source, may be controlled such that when the power demand of the forest work unit is low, energy, for instance hydraulic energy, may be conveyed to the energy storing means. Correspondingly, when the power demand of the forest work unit is high, the secondary power source may be utilized for driving the tools by supplying therefrom hydraulic energy and/or hydraulic power directly or indirectly in order to drive a tool.

In an embodiment, the energy storing means may thus comprise one or more hydraulic pressure accumulator.

In an embodiment, the energy storing means may comprise a cylinder which supports a mass. In such a case, the hydraulic energy may be reserved to be the potential energy of this lifted mass, wherefrom it may again be put to use in a hydraulic system. This may be a particularly advantageous solution when the mass comprises a part of the forest work unit known per se or for instance the mass of a piece being handled by the forest work unit, in which case the forest work unit requires only minimal changes in order to arrange the disclosed storage of energy.

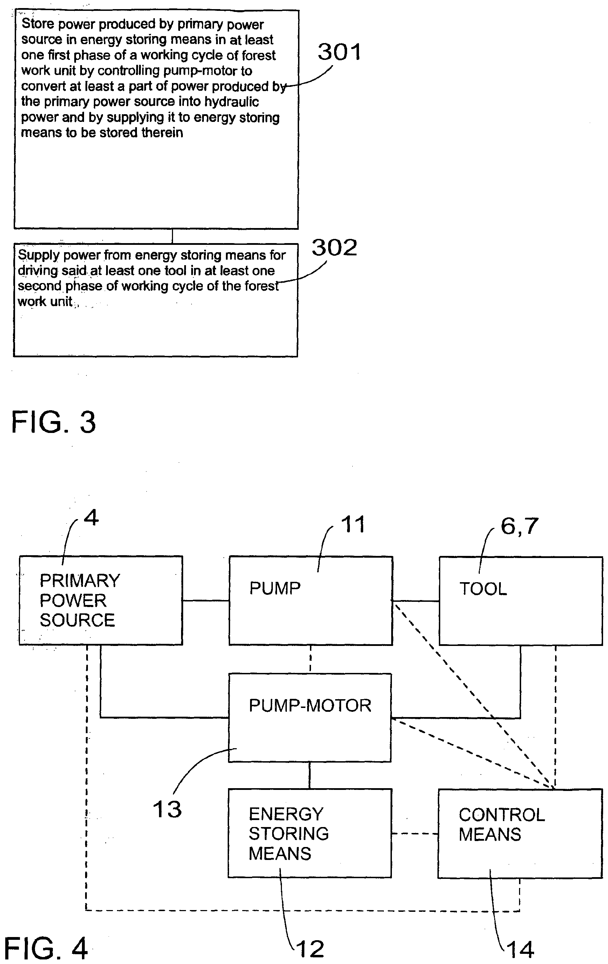

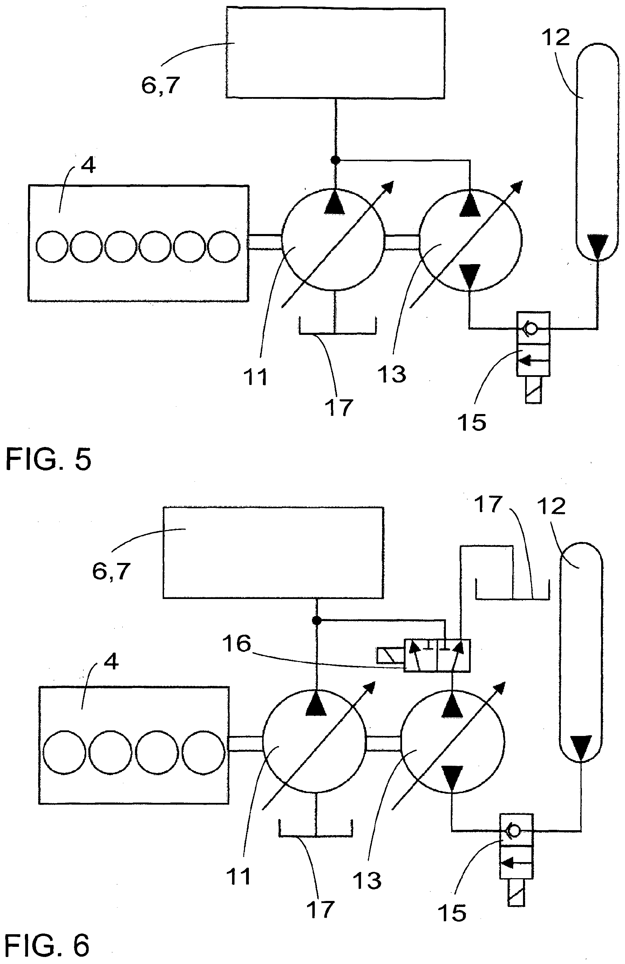

Figure 3 is a schematic view of a method in connection with power production of a forest work unit. The forest work unit 1 may be for instance similar to the forest work unit shown in Figure 1, or another forest work unit 1 known per se. The forest work unit 1 comprises at least one primary power source 4 for driving directly or indirectly at least one tool 6, 7 provided in the forest work unit, at least one pump 11 connected to the primary power source 4 for converting power produced by the primary power source into hydraulic energy, and at least one energy storing means 12 for storing hydraulic energy. The primary power source 4 may be any power source suitable for a mobile work machine, such as a diesel engine. The pump 11 may be any hydraulic pump known per se enabling the power and energy produced by the primary power source to be converted into power and energy of the hydraulic system. The energy storing means 12 may comprise for instance one or more pressure accumulators known per se. At least one tool 6, 7 may comprise for instance at least one actuator of a drive transmission of the forest work unit, at least one actuator implementing a function of at least one harvester head of the forest work unit, and/or at least one actuator implementing at least one function of at least one boom assembly of the forest work unit. Further, the forest work unit 1 comprises at least one controllable hydraulic pump-motor 13 which is directly or indirectly connected to the primary power source 4 and which, on one hand, is further connected to the energy storing means 12 and, on the other hand, at least to the hydraulic system of the tool 6, 7. In other words, a first actuator connection of the pump-motor 13 may be connected directly or indirectly to the energy storing means 12 while a second actuator connection of the pump-motor may be connected directly or indirectly at least to the hydraulic system of the tool 6, 7. In some embodiments, it is possible to arrange one or more stop valves or other corresponding components between the pump-motor 13 and the energy storing means 12 and/or the pump-motor 13 and the tool 6, 7, as shown in connection with Figures 5 and 6, for instance.

The method thus enables storing 301 power produced by the primary power source 4 in the energy storing means 12 in at least one first phase of a working cycle of the forest work unit by controlling the hydraulic pump-motor 13 to convert at least some of the power produced by the primary power source 4 into hydraulic power and by supplying it to the energy storing means 12 to be stored therein, and supplying 302 power from the energy storing means 12 for driving said at least one tool 6, 7 in at least one second phase of the working cycle of the forest work unit. The pump-motor 13 is controlled to supply power produced by the primary power source to the energy storing means 12 so as to be stored therein in the first phase of the working cycle of the forest work unit, and to supply power from the energy storing means 12 to the hydraulic system of at least one tool for driving the tool in the second phase of the working cycle of the forest work unit by adjusting an angle of the controllable hydraulic pump-motor 13. A given working cycle of the forest work unit 1 may in its entirety comprise one or more such first phases of a working cycle, one or more such second phases of a working cycle and/or one or more other phases, and these phases may follow one another in any order, and the order may vary. At least the second phase of the working cycle preferably comprises driving at least one tool 6, 7 of the forest work unit. Typically, the second phase of the working cycle comprises driving at least one actuator implementing at least one function of at least one tool 6, 7 which demands high power, e.g. a harvester head 8, and/or driving a plurality of tools simultaneously.

The first phase of the working cycle may comprise any phase or work phase wherein the capacity of the primary power source 4, such as a diesel engine, is available for use and the energy storing means 12 is capable of receiving energy. In such a case, this power, which at the time of producing the power was excess power, may thus be supplied to the energy storage to be stored therein. This makes it possible for instance to utilize idle periods of the forest work unit 1 and/or, in the case of a harvester in particular, the time taken to move the machine from one work space to another since when moving the forest work unit 1, a harvester in particular, from one work space to another, the power demand on the primary power source 4, such as a diesel engine, is typically relatively low. In this connection, a work space refers to a location of a forest unit which, owing to the reach of the boom assembly of the forest work unit, enables one or more tree trunks to be handled without relocating the forest work unit.

An example of a phase of a working cycle which demands a particularly large amount of power for instance in connection with a harvester or a combi machine may be a phase wherein both the feed function of the harvester head 8, wherein a tree is pulled through the harvester head, delimbing the trunk, and functions of a crane, such as turning, lifting and/or folding, are used simultaneously. As to a forwarder or a combi machine, such a phase of a working cycle may be for instance one wherein the loader and the drive transmission are run simultaneously. Some such phase of the working cycle may then form a so-called second phase of the working cycle.

It is thus to be noted that a given working cycle of the forest work unit may comprise several, mutually different first and/or second phases of the working cycle in the sense meant by the first and the second phase of the working cycle in connection with this solution. These phases may follow one another, or a working cycle may comprise first phases of the working cycle and/or other phases therebetween. A first phase of a working cycle thus refers to a phase of the working cycle wherein power produced by a primary power source is supplied to an energy storing means 12 to be stored therein. A second phase of a working cycle refers to a phase of the working cycle wherein energy stored in an energy storing means 12 is used for producing the power needed by the phase or, actually, functions of the work phase, in which case this energy storing means forms a secondary power source.

Thus, it is possible that to the primary power source 4 of the forest work unit at least one controllable hydraulic pump-motor 13 is connected for conveying and controlling an energy flow between the work hydraulics and the energy storing means. Thus, in the first phase of the working cycle, the pump-motor 13 is controlled to convert at least some of the power produced by the primary power source 4 into hydraulic power and supply it to the energy storing means 12 to be stored therein.

In an embodiment, the pump-motor 13 may comprise a variable displacement pump of the over-center type known for instance in connection with the drive transmission of work machines. It is typical for such a component that its both actuator connections are designed to withstand pressure, and for instance it is possible to implement a change in a drive direction of the work machine by controlling the pump over a so-called zero angle to the other side, in which case the direction of flow of hydraulic fluid in the component changes at the same time. Such a pump may then be used to manage and control the energy flow between the energy storing means and the work hydraulics. Work hydraulics refer to at least one actuator 6, 7 associated with the functions of the forest work unit 1 or a hydraulic circuit/hydraulic system driving the functions of a harvester head, for instance. As a pump for the work hydraulics, a so-called load-sensitive LS pump, for instance, may be used, in which case the displacement of the pump is adjusted such that the system always tries to maintain a pressure level according to an LS signal obtained from the actuators in the system. Alternatively, the displacement of the pump, as well as the pressure level of the circuit, may be for instance electrically controllable in order to meet the hydraulic power demand needed in the system at a given moment. The work hydraulics may also consist of a plurality of separate hydraulic circuits/hydraulic systems, which is known per se, a typical implementation consisting of circuits arranged for controlling both the crane and the harvester head separately.

The pump-motor 13 is connected in parallel with the pump 11 converting power produced by the primary power source 4 into hydraulic energy of the hydraulic circuit/hydraulic system. In many cases, the present solution thus enables the maximum displacement of the pump 11 to be decreased when a significant portion of the volume flow needed may be taken from the pump-motor 13 instead.

In an embodiment, the pump-motor 13 may also be controlled to supply energy stored in the energy storing means 12 to at least one tool 6, 7 of the forest work unit 1 in the second phase of the working cycle by supplying hydraulic energy and/or hydraulic power to the hydraulic system of said at least one tool 6, 7. In such a case, the pressure and flow may further be controlled by means of a directional control valve, for instance.

In an embodiment, the pump-motor 13 may be controlled to supply energy stored in the energy storing means 12 to at least one tool 6, 7 of the forest work unit 1 in the second phase of the working cycle by supplying additional power in a mechanical form to the pump 11 converting the power produced by the primary power source 4 into hydraulic energy. In such a case, the pump-motor may thus serve as a hydraulic motor, converting the hydraulic energy in the energy storing means 12 into mechanical energy for an axle driven by the primary power source.

In an embodiment, at least one of the following phases is identified on the basis of a control command given to at least one tool: the first phase of the working cycle and the second phase of the working cycle. In another embodiment, at least the first and/or the second phase of the working cycle is/are identified in response to on the basis of a control command given to more than one tool simultaneously. Such a control command may be for instance an activation command given by control means 14 of the forest work unit known per se in a manner known per se to one or more tools, in which case the activation command starts a desired procedure in the forest work unit 1. Similarly, the control command may be for instance a control command associated with ending a function of the tool 6, 7 of the forest work unit, or changing a function, for instance power or speed. In such a case, the control command(s) to be transmitted to one or more tools 6, 7 may also be delivered simultaneously to the control of the power source 4 of the forest work unit, in which case these commands may be utilized for identifying the first and second phase of a working cycle and for selecting a corresponding power control. The selection of power control thus refers to conveying energy to the energy storing means or from the energy storing means to at least one tool. The power control may also comprise for instance adjusting the flow and pressure of a pressure medium being discharged from the energy storing means.

This makes it possible to ensure power production which corresponds to the load caused by the procedure of a tool 6, 7 started or stopped by the control command, or a tool 6, 7 whose function has somehow been changed, either by the primary power source 4 alone or by utilizing, as additional power, the energy stored in the energy storing means 12.

The control command may comprise inputs entered by a user, such as motion of a joystick and/or push of a button, control commands produced by the data and control system of the forest work unit and/or formed by combining these. Indirect inputs may comprise for instance a control command associated with for instance a phase of the working cycle derived from the user's control or management activity, changing of the phase of the working cycle or changes in the settings of a phase of the working cycle, in which case the user may for instance by a control movement slow down the speed of a function and thus lower the power needed. Direct inputs may comprise for instance control commands directly entered by the user through a user interface, such as commands for starting or ending phases and/or functions associated therewith.

In an embodiment, the first phase of a working cycle is identified in response to the power demand of the total load of the primary power source 4 not exceeding a predetermined first power limit. In an embodiment, the second work phase is identified in response to the power demand of the total load of the primary power source exceeding a predetermined second power limit. The first and the second power limit may be determined for instance on the basis of the configuration and use of the forest work unit.

In an embodiment, the second phase of a working cycle is identified on the basis of feeding of wood to the harvester head 8 and/or settings of a saw and/or the speeds and pressure levels of the hydraulic system driving the harvester head necessary for these functions. Preferably, the controllable hydraulic pump-motor 13, such as a variable displacement pump, may then also be used for conveying the power needed from the energy storing means to the work hydraulics of the harvester head 8, in which case it is possible to provide each work situation with the necessary, predetermined volume flow and pressure levels. In an embodiment, the variable displacement pump may be for instance a variable displacement pump of the swash plate type widely used in closed-circuit drive transmissions, the swash plate being turnable over the zero angle. In such a case, the displacement is adjustable between a positive and a negative maximum value, enabling the variable displacement pump to be used as a controllable hydraulic pump-motor 13.

In an embodiment, it is possible to restrict the volume flow of the pump 11 connected to the primary power source 4 in the second work phase, when energy stored in the energy storing means 12 is utilized as a source of additional power, i.e. as the secondary power source. In such an embodiment, it is also possible to control and/or adjust distribution of power between the pump 11 connected to the primary power source and the hydraulic pump-motor 13. On the other hand, in embodiments employing a pump 11 equipped with an LS adjuster, the yield of the volume flow of the pump 11 is adjusted substantially automatically to the necessary level, since the LS adjuster of the pump tries to keep the pressure in the system at a level required by an LS signal delivered by a load-sensing channel system to the pump. Instead, for instance in embodiments where the pump 11 comprises an electric displacement adjustment, it may be advantageous to adjust the sum volume flow, i.e. the combined volume flow, of the pump 11 and the pump-motor 13 to a desired predetermined level. In still another embodiment, it is possible to follow the operating speed of the primary power source, such as a diesel engine, and control the pump 11 to a lower displacement and, correspondingly, to control the pump-motor 13 to a higher displacement in response to a detected drop in the operating speed of the primary power source 4 in a load situation, enabling the load level of the primary power source to be lowered and more power to be supplied to the system from the energy storage.

In an embodiment, the above-disclosed solutions enable the primary power source 4 of the forest work unit to be dimensioned such that the maximum power produced by it is lower than the maximum power demand of at least one working cycle of the forest work unit. This enables optimal dimensioning and minimization of fuel consumption for the primary power source. Then, in an embodiment, the first power limit and the second power limit may substantially equal the maximum power produced by the primary power source.

In an embodiment, a CAN bus controlling the primary power source may also be utilized for identifying the first and the second phase of a working cycle. In such a case, it is possible to obtain accurate data about the load of the primary power source by following for instance its rotation speed, torque, load percentage and fuel consumption, by following instantaneous and cumulative consumption, for instance. It is then possible on the basis of the load data about the primary power source 4 to identify the first and/or the second phase of the working cycle, i.e. to determine whether or not it is possible to take energy from the primary power source to the energy storing means or whether or not it is necessary to obtain additional power from the energy storing means for the functions of the work phase.

Figure 4 is a schematic view of an arrangement in power control of a forest work unit 1. Such an arrangement enables one or more of the above-disclosed methods and/or method steps to be implemented. The forest work unit 1 comprises at least one primary power source 4 for driving at least one tool 6, 7 provided in the forest work unit, at least one pump 11 connected to the primary power source 4 for converting power produced by the primary power source into hydraulic energy, and at least one energy storing means 12 for storing hydraulic energy. The energy storing means 12 are arrangeable to store power produced by the primary power source 4 at least in one first phase of a working cycle of the forest work unit 1 and to supply the stored energy for driving at least one tool 6, 7 of the forest work unit 1 at least in one second work phase of the working cycle of the forest work unit.

The arrangement comprises at least one hydraulic pump-motor 13 connected to the primary power source of the forest work unit, in which case in said first phase of the working cycle the hydraulic pump-motor 13 is controlled to convert at least some of the power produced by the primary power source into hydraulic power and to supply it to the energy storing means 12 to be stored therein. The hydraulic pump-motor 13 is connected, on one hand, to the energy storing means 12 and, on the other hand, at least to the hydraulic system of the tool 6, 7. A first actuator connection of the pump-motor 13 is connected directly or indirectly to the energy storing means 12 while a second actuator connection of the pump-motor 13 is connected directly or indirectly at least to the hydraulic system of the tool 6, 7.

The hydraulic pump-motor 13 is arrangeable to supply, in a hydraulic form, energy stored in the energy storing means 12 to at least one tool 6, 7 of the forest work unit 1 in the second phase of the working cycle by supplying energy to the hydraulic system of said at least one tool 6, 7.

In an embodiment, the hydraulic pump-motor 13 may be arrangeable to supply energy stored in the energy storing means 12 to at least one tool 6, 7 of the forest work unit in the second phase of the working cycle by supplying additional power in a mechanical form to the pump 11 converting the power produced by the primary power source 4 into hydraulic energy.

In an embodiment, the arrangement may comprise control means 14 for identifying at least a first phase of a working cycle and for controlling the hydraulic pump-motor 13 on the basis of at least one of the following factors: a control command given to at least one tool 6, 7 simultaneously, and a power demand not exceeding a first power limit of the total load of the primary power source 4. In an embodiment, the first phase of the working cycle may alternatively also be identified on the basis of a control command given to at least two or more tools 6, 7 simultaneously.

In an embodiment, the arrangement may comprise control means 14 for identifying at least a second phase of a working cycle and for controlling the hydraulic pump-motor 13 on the basis of at least the following factors: a control command given to at least one tool 6, 7 simultaneously, and a power demand exceeding a second power limit of the total load of the primary power source. In an embodiment, the second phase of the working cycle may alternatively also be identified on the basis of a control command given to at least two or more tools 6, 7 simultaneously.

The control means 14 may comprise for instance a data transfer bus enabling the control commands to be transmitted to a power supply arrangement. The data transfer bus may be a CAN bus known per se, for instance. Preferably, the control means 14 may further comprise a control unit which may be arranged at least to receive information from at least one sensor and/or user interface of the forest work unit and to determine control commands for controlling at least one function of the forest work unit. In addition to the power supply arrangement, the same control unit may be arranged to control at least one other function of the forest work unit. The control unit may be an integrated part of the forest work unit, or it may be provided as a remote control unit.

In an embodiment, the above-disclosed solutions enable the primary power source 4 of the forest work unit to be dimensioned such that the maximum power produced by it is lower than the maximum power demand of at least one working cycle of the forest work unit. This enables optimal dimensioning and minimization of fuel consumption for the primary power source.

Figure 5 is a schematic view of an arrangement in power control of a forest work unit. In this embodiment, the hydraulic pump-motor 13 may be connected to the energy storing means 12, such as to at least one pressure accumulator, by a controllable valve 15 which may be controlled in the first phase of the working cycle to a first position wherein energy, for instance transmitted by a pressure medium, is transferred to the energy storing means 12 but cannot be discharged therefrom. Correspondingly, the controllable valve 15 may then be controlled in the second phase of the working cycle to a second position wherein energy, for instance transmitted by a pressure medium, is allowed to be transferred from the energy storing means to the hydraulic pump-motor 13.

In an embodiment, the hydraulic pump-motor 13 may be connected directly to the hydraulic system of at least one tool of the forest work unit, as shown in Figure 5. In such a case, the hydraulic pump-motor 13 may in the second phase of the working cycle of the forest work unit be used for supplying power directly for driving at least one tool 6, 7 as power additional to the power produced by the primary power source by utilizing directly the volume flow obtained from the energy storing means 12.

In the embodiment according to Figure 6, the arrangement may comprise a second control valve 16, and in a first position of this second control valve the hydraulic pump-motor 13 or, to be more precise, generally the connection facing the work hydraulics of the hydraulic pump-motor 13, is connected to a tank 17, and in a second position of this second control valve the hydraulic pump-motor 13 is connected to the hydraulic system of at least one tool 6, 7. In such a case, in the second phase of the working cycle of the forest work machine, energy stored in the energy storing means may be supplied for driving at least one tool of the forest work unit in the first position of the control valve by supplying additional power in a mechanical form to the pump converting the power produced by the primary power source into hydraulic energy, and in the second position of the control valve by supplying directly to the hydraulic system of the tool, as in connection with the embodiment of Figure 5. In other words, from the energy storing means, power is taken in the first position of the second controllable valve 16 to supplement the primary power source for driving power-demanding actuators on the same power line, such as other pumps and/or for instance actuators of the drive transmission.

The control described in connection with the above-disclosed embodiments may be implemented by the control means 14 of the forest work unit 1, for instance.

The present solution is particularly useful when being applied for use in connection with starting a tree trunk feeding or sawing function, since in such a phase of the working cycle the power demand is typically instantaneously high. Thus, the total power level may be increased by utilizing power stored in the energy storing means as additional energy supplementary to the power produced by the primary power source. Consequently, fuel consumption and exhaust gas emissions from a diesel engine, for instance, can be minimized. The advantages of such a solution become apparent particularly in the case of a hydraulic system driving a harvester head of a harvester, in which case power demands vary strongly particularly when feeding and sawing functions alternate while handling a tree trunk. Similar abrupt high power demands may also occur for instance in connection with the functions of a crane of a harvester or a loader of a forwarder, particularly when running the loader and the drive transmission simultaneously.

The present solution may thus be applied for instance such that the primary power source of the forest work unit may drive a hydraulic pump pressurizing and filling one or more large pressure accumulators serving as energy storing means, in which case the pump-motor may serve as a secondary power source capable of utilizing the pressurized medium at least from this at least one pressure accumulator. It is possible also in this case to control the pump-motor to anticipate variations in the power demand. On the other hand, the pressure accumulator itself may serve as said secondary power source, in which case the control of the secondary power source could be understood to refer for instance to adjusting the flow and pressure of the pressure medium being discharged from the pressure accumulator.

In an embodiment, the secondary power source, i.e. the energy storing means 12, and/or the pump-motor 13 connected thereto, such as a variable displacement pump-motor, may be controlled in response to identifying the diameter of a tree being handled. In such a case, it is possible for instance to control the displacement of the pump-motor, such as a variable displacement pump-motor, to be greater in response to identifying a tree being handled having a larger-than-average diameter and, correspondingly, to be smaller in response to identifying a tree being handled having a smaller-than-average diameter. It is also possible to set limit values for the diameter of a tree, on the basis of which the displacement may be controlled step by step, or the displacement may be adjusted steplessly with respect to the identified diameter of a tree. This enables a sufficient amount of power to be guaranteed for ensuring a higher total power required for handling a tree with a larger diameter, whereas when expecting a smaller power demand while handling thinner trees, the energy storage of the energy storing means will not be discharged unnecessarily quickly.

In an embodiment, the first and the second phase of the working cycle and/or the power demand associated with each phase may be estimated and/or determined by utilizing theoretical and/or empirical data about the nature of a conventional working cycle and about how the different work phases follow one another and load the power transmission of the forest work unit. In other words, for instance the handling of a single tree trunk by a harvester may comprise for instance the following work phases: bringing a harvester head to a base of a tree to be felled, felling cut, lifting a tree and controlling the felling, feeding and delimbing a first log, crosscut sawing, feeding a second log, crosscut sawing and repeating the feeding and crosscut sawing of the log until the trunk is handled all the way to the top and the harvester head is opened, dropping the top on the ground and setting the harvester head upright, enabling it to grab the next trunk. In most cases, the power required by each work phase may be estimated at a sufficient accuracy on the basis of existing data. In other words, the power to be expected from the system may in some embodiments be estimated sufficiently reliably also without utilizing the data about the trunk being handled.

In different embodiments, the forest work unit 1 may be a harvester, a forwarder or a combi machine, for instance.

It is particularly advantageous to implement the secondary power source, the above-disclosed energy storing means and the power control method of the forest work unit hydraulically in connection with forest work units since exceptionally many of the functions of the forest work unit are in any case implemented hydraulically, thus enabling unnecessary energy conversions to be avoided. For example, introducing a corresponding hybrid solution into the forest work unit as an electric hybrid solution would mean more energy conversions if the final function cannot be converted from hydraulic into an electric one.

As described above, it is important to be able to respond to the instantaneous, even high power demands since even an instantaneous lack of a sufficient amount of available power may thus lower the efficiency of the process and the quality of work. The above-described solution enables a sufficient power production to be provided also when the power demand exceeds the maximum power of the primary power source. On the other hand, the disclosed solution enables the dimensioning of the primary power source to be optimized since the primary power source does not have to be dimensioned according to an instantaneous maximum load.

The above-disclosed solution further enables valuable accumulator capacity, which may be difficult to arranged in the machine, to be utilized in the best possible manner. The power stored in the pressure accumulator by such a solution may in practice be used in its entirety since as the charge level of the pressure accumulator approaches zero, the necessary additional power for driving the hydraulic pump-motor 13 of the hybrid may be taken from the primary power source 4, but even in such a case the remaining pressure of the pressure accumulator decreases the pressure difference over the hydraulic pump-motor. Further, the amount of hydraulic power to be taken from the energy storing means may be controlled and adjusted relatively accurately and easily, owing to the variable displacement pump-motor, for instance. In the present solution, the energy flow may thus be conveyed from the energy storing means to the work hydraulics by means of a pump-motor operating on the principle of displacement, and it is not necessary to choke the flow by means of a valve or another corresponding choking means connecting the pressure accumulator to the work hydraulics, for instance.

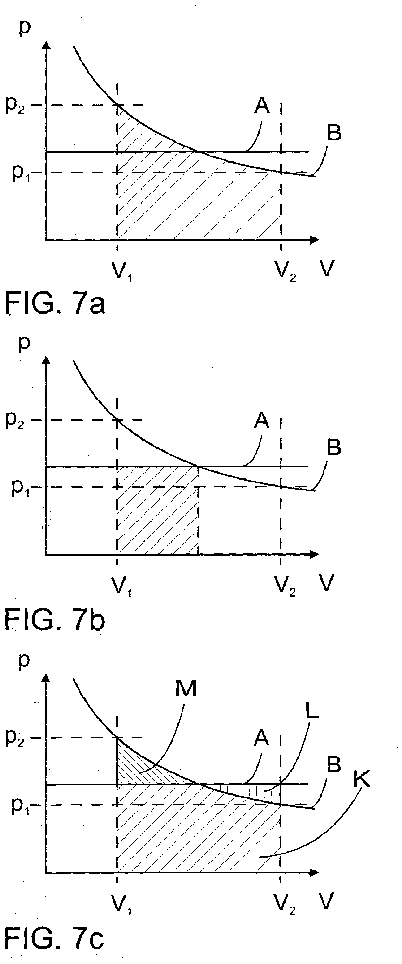

This is illustrated in Figures 7a, 7b, and 7c schematically showing utilizability of energy stored in an energy storing means. Figure 7a shows, by means of a lined area, an energy storing capacity of an energy storing means utilizable under certain circumstances between pressure p₁ and a corresponding volume V₁ and pressure p₂ and a corresponding volume V₂. The dependency of the pressure and volume of the energy storing means is described in line B while the pressure in the system in a certain phase of a working cycle is described in line A. Figure 7b illustrates a problem with known solutions equipped with a hydraulic pressure accumulator. In the known solutions, it is possible to utilize a portion of energy stored in the hydraulic pressure accumulator that is shown by the lined area in Figure 7b, since it is only possible to utilize a portion of the pressure accumulator that has a pressure higher than the pressure of the system. On the other hand, of this energy, too, a portion that is designated in area M in Figure 7c, is choked into losses since it is only possible to utilize a portion of the energy having a pressure corresponding to that of the system. Figure 7c thus schematically shows a significant advantage of the present solution over the known solutions. In the shown solution, it is possible to utilize the entire energy capacity of the energy storing means. A portion of the energy designated by reference K can be utilized directly for pressurizing the system, when energy depicted by area L is taken from the primary power source when necessary. The amount of necessary additional power is, however, very small since, owing to the pressure of the energy storing means, the pressure difference over the pump-motor is small. In addition, the energy depicted by area M can be utilized by using the pump-motor as a motor supplying mechanical power to the axle of the primary power source.

It is to be understood that the above description and the related figures are only intended to illustrate the present solution. Thus, the solution is not restricted merely to the embodiment described above, but many different variations and modifications thereof that are feasible within the, will be apparent to those skilled in the art.

It is apparent to a person skilled in the art that, as technology advances, the basic idea of the present solution may be implemented in many different ways. The disclosed solution and embodiments thereof are thus not restricted to the above-described examples but may vary within the scope of the claims. The scope of the invention being defined by the appended claims.

## Claims

1. A method for supplying power to a forest work unit (1) comprising at least one primary power source (4) for driving at least one tool (6, 7, 8) provided in the forest work unit, at least one pump (11) connected to the primary power source for converting power produced by the primary power source into hydraulic energy for at least said tool (6, 7, 8), and at least one energy storing means (12) for storing hydraulic energy, **characterized in that**
to the primary power source of the forest work unit, at least one controllable hydraulic pump-motor (13) is further connected which, on one hand, is further connected to the energy storing means (12) and, on the other hand, at least to a hydraulic system of said tool and in parallel with the pump (11) converting power produced by the primary power source into hydraulic energy of the hydraulic system, and **in that** the method comprises
storing (301) power produced by the primary power source in the energy storing means in at least one first phase of a working cycle of the forest work unit by adjusting an angle of the controllable hydraulic pump-motor (13) such that the hydraulic pump-motor (13) supplies at least some of the power produced by the primary power source to the energy storing means to be stored therein as hydraulic energy, and
supplying (302), by adjusting the angle of the controllable hydraulic pump-motor, the hydraulic power from the energy storing means to the hydraulic system of said at least one tool for driving the tool in at least one second phase of the working cycle of the forest work unit.

2. A method as claimed in claim 1, comprising controlling the pump-motor to convert the hydraulic energy in the energy storing means (12) into mechanical energy for an axle driven by the primary power source (4) in the second phase of the working cycle.

3. A method as claimed in claim 1 or 2, in which at least one of the following phases is identified in response to a control command given to the at least one tool (6, 7, 8): the first phase of the working cycle and the second phase of the working cycle.

4. A method as claimed in any one of claims 1 to 3, in which the first work phase is identified in response to a power demand of a total load of the primary power source not exceeding a predetermined first power limit.

5. A method as claimed in any one of claims 1 to 4, in which the second work phase is identified in response to the power demand of the total load of the primary power source exceeding a predetermined second power limit.

6. A method as claimed in any one of claims 1 to 5, in which the primary power source of the forest work unit is dimensioned such that a maximum power produced by it is lower than a maximum power demand of at least one working cycle of the forest work unit.

7. A method as claimed in any one of claims 1 to 6, in which the at least one tool (6, 7, 8) comprises at least one of the following: at least one actuator implementing a function of at least one harvester head, at least one actuator implementing at least one function of at least one boom assembly (2), and at least one actuator implementing at least one function of a drive transmission of the forest work unit.

8. A forest work unit (1) comprising an arrangement comprising at least one primary power source (4) for driving at least one tool (6, 7, 8) provided in the forest work unit, at least one pump (11) connected to the primary power source for converting power produced by the primary power source into hydraulic energy for at least said tool (6, 7, 8), and at least one energy storing means (12) for storing hydraulic energy, **characterized in that**
the at least one energy storing means (12) are arrangeable to store at least some of the power produced by the primary power source at least in one first phase of a working cycle of the forest work unit, and to supply the stored energy for driving the at least one tool (6, 7, 8) of the forest work unit at least in one second work phase of the working cycle of the forest work unit, and
at least one controllable hydraulic pump-motor (13) connected to the primary power source of the forest work unit, which, on one hand, is connected to the energy storing means (12) and, on the other hand, at least to a hydraulic system of said tool and in parallel with the pump (11) converting power produced by the primary power source into hydraulic energy of the hydraulic system, an angle of said controllable hydraulic pump-motor (13) being adjustable such that in said first phase of the working cycle the controllable hydraulic pump-motor (13) is arrangeable to supply at least some of the power produced by the primary power source to the energy storing means to be stored therein as hydraulic energy and, in said second phase of the working cycle, the controllable hydraulic pump-motor is arrangeable to supply at least hydraulic power from the energy storing means to the hydraulic system of the at least one tool for driving the tool.

9. A forest working unit as claimed in claim 8, in which the pump-motor (13) is arrangeable to convert the hydraulic energy in the energy storing means into mechanical energy for an axle driven by the primary power source (4) in the second phase of the working cycle.

10. A forest working unit as claimed in claim 8 or 9, which comprises control means (14) for identifying at least the first phase of the working cycle and for controlling the pump-motor (13) in response to at least one of the following factors: a control command given to the at least one tool (6, 7, 8), and a power demand not exceeding a first power limit of a total load of the primary power source.

11. A forest working unit as claimed in any one of claims 8 to 10, which comprises control means (14) for identifying at least the second phase of the working cycle and for controlling the pump-motor (13) in response to at least one of the following factors: a control command given to the at least one tool, and a power demand exceeding a second power limit of the total load of the primary power source.

12. A forest working unit as claimed in any one of claims 8 to 11, in which a maximum power produced by the primary power source of the forest work unit is lower than a maximum power demand of at least one working cycle of the forest work unit.

13. A forest working unit as claimed in any one of claims 8 to 12, in which the at least one tool comprises at least one of the following: at least one actuator implementing a function of at least one harvester head, at least one actuator implementing at least one function of at least one boom assembly (2), and at least one actuator implementing at least one function of a drive transmission of the forest work unit.

14. A forest working unit as claimed in any one of claims 8 to 13, in which the energy storing means (12) comprises at least one hydraulic pressure accumulator.

## Patentansprüche

1. Verfahren zum Zuführen von Kraft zu einer Forstwirtschafts-Einheit (1), die wenigstens eine primäre Kraftquelle (4) zum Antreiben wenigstens eines in der Forstwirtschafts-Einheit vorhandenen Werkzeugs (6, 7, 8), wenigstens eine Pumpe (11), die mit der primären Kraftquelle verbunden ist, um durch die primäre Kraftquelle erzeugte Kraft in hydraulische Energie für das wenigstens eine Werkzeug (6, 7, 8) umzuwandeln, und wenigstens eine Energiespeichereinrichtung (12) zum Speichern hydraulischer Energie umfasst, **dadurch gekennzeichnet, dass**
mit der primären Kraftquelle der Forstwirtschafts-Einheit des Weiteren wenigstens ein steuerbarer Hydraulikpumpen-Motor (13) verbunden ist, der des Weiteren einerseits mit der Energiespeichereinrichtung (12) verbunden ist und andererseits wenigstens mit einem Hydrauliksystem des Werkzeugs und parallel mit der Pumpe (11) verbunden ist, die durch die primäre Kraftquelle erzeugte Kraft in hydraulische Energie des Hydrauliksystems umwandelt, und dadurch, dass das Verfahren umfasst:
Speichern (301) durch die primäre Kraftquelle erzeugter Kraft in der Energiespeichereinrichtung wenigstens in einer ersten Phase eines Arbeitszyklus der Forstwirtschafts-Einheit durch Einstellen eines Winkels des steuerbaren Hydraulikpumpen-Motors (13) so, dass der Hydraulikpumpen-Motor (13) wenigstens einen Teil der durch die primäre Kraftquelle erzeugten Kraft der Energiespeichereinrichtung zum Speichern als hydraulische Energie darin zuführt, und
Zuführen (302) der hydraulischen Kraft von der Energiespeichereinrichtung zu dem Hydrauliksystem des wenigstens einen Werkzeugs durch Einstellen des Winkels des steuerbaren Hydraulikpumpen-Motors, um das Werkzeug in wenigstens einer zweiten Phase des Arbeitszyklus der Forstwirtschafts-Einheit anzutreiben.

2. Verfahren nach Anspruch 1, das umfasst, dass der Pumpen-Motor gesteuert wird, um die hydraulische Energie in der Energiespeichereinrichtung (12) in mechanische Energie für eine Achse umzuwandeln, die in der zweiten Phase des Arbeitszyklus durch die primäre Kraftquelle (4) angetrieben wird.

3. Verfahren nach Anspruch 1 oder 2, wobei wenigstens eine der folgenden Phasen in Reaktion auf einen dem wenigstens einen Werkzeug (6, 7, 8) erteilten Steuerungs-Befehl identifiziert wird:
die erste Phase des Arbeitszyklus und die zweite Phase des Arbeitszyklus.

4. Verfahren nach einem der Ansprüche 1 bis 3, wobei die erste Arbeitsphase in Reaktion darauf identifiziert wird, dass ein Kraft-Bedarf einer Gesamtlast der primären Kraftquelle einen vorgegebenen ersten Kraft-Grenzwert nicht überschreitet.

5. Verfahren nach einem der Ansprüche 1 bis 4, wobei die zweite Arbeitsphase in Reaktion darauf identifiziert wird, dass der Kraft-Bedarf der Gesamtlast der primären Kraftquelle einen vorgegebenen zweiten Kraft-Grenzwert überschreitet.

6. Verfahren nach einem der Ansprüche 1 bis 5, wobei die primäre Kraftquelle der Forstwirtschafts-Einheit so dimensioniert ist, dass eine von ihr erzeugte maximale Kraft geringer ist als ein maximaler Kraft-Bedarf wenigstens eines Arbeitszyklus der Forstwirtschafts-Einheit.

7. Verfahren nach einem der Ansprüche 1 bis 6, wobei das wenigstens eine Werkzeug (6, 7, 8) wenigstens eines der folgenden Elemente umfasst:
wenigstens ein Betätigungselement, das eine Funktion wenigstens eines Harvesterkopfes erfüllt, wenigstens ein Betätigungselement, das wenigstens eine Funktion wenigstens einer Ausleger-Baugruppe (2) erfüllt, und wenigstens ein Betätigungselement, das wenigstens eine Funktion einer Antriebskraft-Übertragungseinrichtung der Forstwirtschafts-Einheit erfüllt.

8. Forstwirtschafts-Einheit (1), die eine Anordnung umfasst, die die wenigstens eine primäre Kraftquelle (4) zum Antreiben wenigstens eines in der Forstwirtschafts-Einheit vorhandenen Werkzeugs (6, 7, 8), wenigstens eine Pumpe (11), die mit der primären Kraftquelle verbunden ist, um durch die primäre Kraftquelle erzeugte Kraft in hydraulische Energie für das wenigstens eine Werkzeug (6, 7, 8) umzuwandeln, und wenigstens eine Energiespeichereinrichtung (12) zum Speichern hydraulischer Energie umfasst, **dadurch gekennzeichnet, dass**
die wenigstens eine Energiespeichereinrichtung (12) so eingerichtet werden kann, dass sie wenigstens einen Teil der durch die primäre Kraftquelle erzeugten Kraft wenigstens in einer ersten Phase eines Arbeitszyklus der Forstwirtschafts-Einheit speichert und die gespeicherte Energie zum Antreiben des wenigstens einen Werkzeugs (6, 7, 8) der Forstwirtschafts-Einheit wenigstens in einer zweiten Arbeitsphase des Arbeitszyklus der Forstwirtschafts-Einheit zuführt, und
wenigstens ein steuerbarer Hydraulikpumpen-Motor (13) mit der primären Kraftquelle der Forstwirtschafts-Einheit verbunden ist, der einerseits mit der Energiespeichereinrichtung (12) und andererseits mit wenigstens einem Hydrauliksystem des Werkzeugs und parallel mit der Pumpe (11) verbunden ist, die durch die primäre Kraftquelle erzeugte Kraft in hydraulische Energie des Hydrauliksystems umwandelt, wobei ein Winkel des steuerbaren Hydraulikpumpen-Motors (13) so eingestellt werden kann, dass in der ersten Phase des Arbeitszyklus der steuerbare Hydraulikpumpen-Motor (13) so eingerichtet werden kann, dass er wenigstens einen Teil der durch die primäre Kraftquelle erzeugten Kraft der Energiespeichereinrichtung zum Speichern als hydraulische Energie darin zuführt, und der steuerbare Hydraulikpumpen-Motor in der zweiten Phase des Arbeitszyklus so eingerichtet werden kann, dass er wenigstens hydraulische Kraft von der Energiespeichereinrichtung dem Hydrauliksystem des wenigstens einen Werkzeugs zum Antreiben des Werkzeugs zuführt.

9. Forstwirtschafts-Einheit nach Anspruch 8, wobei der Pumpen-Motor (13) so eingerichtet werden kann, dass er die hydraulische Energie in der Energiespeichereinrichtung in mechanische Energie für eine Achse umwandelt, die in der zweiten Phase des Arbeitszyklus durch die primäre Kraftquelle (4) angetrieben wird.

10. Forstwirtschafts-Einheit nach Anspruch 8 oder 9, die eine Steuereinrichtung (14) umfasst, mit der in Reaktion auf wenigstens einen der folgenden Faktoren wenigstens die erste Phase des Arbeitszyklus identifiziert wird und der Pumpen-Motor (13) gesteuert wird:
einen dem wenigstens einen Werkzeug (6, 7, 8) erteilten Steuerungs-Befehl und einen Kraft-Bedarf, der einen ersten Kraft-Grenzwert einer Gesamtlast der primären Kraftquelle nicht überschreitet.

11. Forstwirtschafts-Einheit nach einem der Ansprüche 8 bis 10, die eine Steuereinrichtung (14) umfasst, mit der in Reaktion auf wenigstens einen der folgenden Faktoren wenigstens die zweite Phase des Arbeitszyklus identifiziert wird und der Pumpen-Motor (13) gesteuert wird:
einen dem wenigstens einen Werkzeug (6, 7, 8) erteilten Steuerungs-Befehl und einen Kraft-Bedarf, der einen zweiten Kraft-Grenzwert einer Gesamtlast der primären Kraftquelle überschreitet.

12. Forstwirtschafts-Einheit nach einem der Ansprüche 8 bis 11, wobei eine durch die primäre Kraftquelle erzeugte maximale Kraft geringer ist als ein maximaler Kraft-Bedarf wenigstens eines Arbeitszyklus der Forstwirtschafts-Einheit.

13. Forstwirtschafts-Einheit nach einem der Ansprüche 8 bis 12, wobei das wenigstens eine Werkzeug (6, 7, 8) wenigstens eines der folgenden Elemente umfasst:
wenigstens ein Betätigungselement, das eine Funktion wenigstens eines Harvesterkopfes erfüllt, wenigstens ein Betätigungselement, das wenigstens eine Funktion wenigstens einer Ausleger-Baugruppe (2) erfüllt, und wenigstens ein Betätigungselement, das wenigstens eine Funktion einer Antriebskraft-Übertragungseinrichtung der Forstwirtschafts-Einheit erfüllt.

14. Forstwirtschafts-Einheit nach einem der Ansprüche 8 bis 13, wobei die Energiespeichereinrichtung (12) wenigstens einen Hydraulikdruckspeicher umfasst.

## Revendications

1. Procédé d'alimentation d'énergie à une unité de travail forestier (1) comprenant au moins une source d'énergie primaire (4) pour l'entraînement d'au moins un outil (6, 7, 8) disposé dans l'unité de travail forestier, au moins une pompe (11) connectée à la source d'énergie primaire afin de convertir l'énergie produite par la source d'énergie primaire en énergie hydraulique pour au moins ledit outil (6, 7, 8), et au moins un moyen de stockage d'énergie (12) afin de stocker l'énergie hydraulique, **caractérisé en ce que**
à la source d'énergie primaire de l'unité de travail forestier, au moins un moteur de pompe hydraulique (13) est en outre connecté qui, d'un côté, est en outre connecté au moyen de stockage d'énergie (12) et, de l'autre côté, à au moins un système hydraulique dudit outil et en parallèle à la pompe (11) convertissant l'énergie produite par la source d'énergie primaire en énergie hydraulique du système hydraulique, et **en ce que** le procédé comprend
le stockage (301) de l'énergie produite par la source d'énergie primaire dans le moyen de stockage d'énergie dans au moins une première phase d'un cycle de travail de l'unité de travail forestier en ajustant un angle du moteur de pompe hydraulique (13) de sorte que le moteur de pompe hydraulique (13) alimente au moins une partie de l'énergie produite par la source d'énergie primaire au moyen de stockage d'énergie à stocker à l'intérieur sous la forme d'énergie hydraulique, et
l'alimentation (302), en ajustant l'angle du moteur de pompe hydraulique, de l'énergie hydraulique à partir du moyen de stockage d'énergie au système hydraulique dudit au moins un outil pour l'entraînement de l'outil dans au moins une seconde phase du cycle de travail de l'unité de travail forestier.

2. Procédé tel que revendiqué selon la revendication 1, comprenant la commande du moteur de pompe pour convertir l'énergie hydraulique en moyen de stockage d'énergie (12) en énergie mécanique pour un axe entrainé par la source d'énergie primaire (4) dans la seconde phase du cycle de travail.

3. Procédé tel que revendiqué selon la revendication 1 ou 2, dans lequel au moins l'une des phases suivantes est identifiée en réponse à une instruction de commande donnée audit outil (6, 7, 8) : la première phase du cycle de travail et la seconde phase du cycle de travail.

4. Procédé tel que revendiqué selon l'une quelconque des revendications 1 à 3, dans lequel la première phase de travail est identifiée en réponse à une demande en énergie d'une charge totale de la source d'énergie primaire n'excédant pas une première limite d'énergie prédéterminée.

5. Procédé tel que revendiqué selon l'une quelconque des revendications 1 à 4, dans lequel la seconde phase de travail est identifiée en réponse à la demande en énergie de la charge totale de la source d'énergie primaire excédant une seconde limite d'énergie prédéterminée.

6. Procédé tel que revendiqué selon l'une quelconque des revendications 1 à 5, dans lequel la source d'énergie primaire de l'unité de travail forestier est calibrée de sorte qu'une énergie maximale produite par elle soit inférieure à une demande maximale en énergie d'au moins un cycle de travail de l'unité de travail forestier.

7. Procédé tel que revendiqué selon l'une quelconque des revendications 1 à 6, dans lequel ledit outil (6, 7, 8) comprend au moins l'un de ce qui suit : au moins un dispositif d'actionnement mettant en oeuvre une fonction d'au moins une tête de récolte, au moins un dispositif d'actionnement mettant en oeuvre au moins une fonction d'au moins un ensemble rampe (2), et au moins un dispositif d'actionnement mettant en oeuvre au moins une fonction d'une transmission d'entraînement de l'unité de travail forestier.

8. Unité de travail forestier (1) comprenant un agencement comprenant au moins une source d'énergie primaire (4) afin d'entraîner au moins un outil (6, 7, 8) disposé dans l'unité de travail forestier, au moins une pompe (11) connectée à la source d'énergie primaire afin de convertir l'énergie produite par la source d'énergie primaire en énergie hydraulique pour au moins ledit outil (6, 7, 8), et au moins un moyen de stockage d'énergie (12) afin de stocker l'énergie hydraulique, **caractérisé en ce que**
ledit moyen de stockage d'énergie (12) peut être disposé afin de stocker au moins une partie de l'énergie produite par la source d'énergie primaire au moins dans une première phase d'un cycle de travail de l'unité de travail forestier, et pour alimenter l'énergie stockée afin d'entraîner ledit outil (6, 7, 8) de l'unité de travail forestier au moins dans une seconde phase de travail du cycle de travail de l'unité de travail forestier, et
au moins un moteur de pompe hydraulique (13) connecté à la source d'énergie primaire de l'unité de travail forestier, qui, d'un côté, est connecté au moyen de stockage d'énergie (12) et, de l'autre côté, au moins à un système hydraulique dudit outil et en parallèle à la pompe (11) la conversion de l'énergie produite par la source d'énergie primaire en énergie hydraulique du système hydraulique, un angle dudit moteur de pompe hydraulique (13) étant ajustable de sorte que dans ladite première phase du cycle de travail le moteur de pompe hydraulique (13) peut être disposé afin d'alimenter au moins une partie de l'énergie produite par la source d'énergie primaire au moyen de stockage d'énergie à stocker à l'intérieur sous la forme d'énergie hydraulique et, dans ladite seconde phase du cycle de travail, le moteur de pompe hydraulique peut être disposé afin d'alimenter au moins de l'énergie hydraulique provenant du moyen de stockage d'énergie au système hydraulique dudit outil afin d'entraîner l'outil.

9. Unité de travail forestier telle que revendiquée selon la revendication 8, dans laquelle le moteur de pompe (13) peut être disposé afin de convertir l'énergie hydraulique dans le moyen de stockage d'énergie en énergie mécanique pour un axe entraîné par la source d'énergie primaire (4) dans la seconde phase du cycle de travail.

10. Unité de travail forestier telle que revendiquée selon la revendication 8 ou 9, qui comprend un moyen de commande (14) afin d'identifier au moins la première phase du cycle de travail et de commander le moteur de pompe (13) en réponse à au moins l'un des facteurs suivants : une instruction de commande donnée audit outil (6, 7, 8), et une demande en énergie n'excédant pas une première limite d'énergie d'une charge totale de la source d'énergie primaire.

11. Unité de travail forestier telle que revendiquée selon l'une quelconque des revendications 8 à 10, qui comprend un moyen de commande (14) afin d'identifier au moins la seconde phase du cycle de travail et de commander le moteur de pompe (13) en réponse à au moins l'un des facteurs suivants : une instruction de commande donnée audit outil, et une demande en énergie excédant une seconde limite d'énergie de la charge totale de la source d'énergie primaire.

12. Unité de travail forestier telle que revendiquée selon l'une quelconque des revendications 8 à 11, dans laquelle une énergie maximale produite par la source d'énergie primaire de l'unité de travail forestier est inférieure à une demande maximale en énergie d'au moins un cycle de travail de l'unité de travail forestier.

13. Unité de travail forestier telle que revendiquée selon l'une quelconque des revendications 8 à 12, dans laquelle ledit outil comprend au moins l'un de ce qui suit : au moins un dispositif d'actionnement mettant en oeuvre une fonction d'au moins une tête de récolte, au moins un dispositif d'actionnement mettant en oeuvre au moins une fonction d'au moins un ensemble rampe (2), et au moins un dispositif d'actionnement mettant en oeuvre au moins une fonction d'une transmission d'entraînement de l'unité de travail forestier.

14. Unité de travail forestier telle que revendiquée selon l'une quelconque des revendications 8 à 13, dans laquelle le moyen de stockage d'énergie (12) comprend au moins un accumulateur de pression hydraulique.
